# EUROPÄISCHE PATENTSCHRIFT

(11) **EP 2 269 758 B1**
(45) Veröffentlichungstag und Bekanntmachung des Hinweises auf die Patenterteilung: **17.05.2017**
(21) Anmeldenummer: 09400034.6
(22) Anmeldetag: 03.07.2009
(51) Int. Cl.: B23K 9/067, B23K 9/095, B23K 9/12

(54) **Gleichstromlichtbogenschweissverfahren**
DC arc welding method
Procédé de soudage à l'arc à courant continue

(43) Veröffentlichungstag der Anmeldung: 05.01.2011
(73) Patentinhaber: EWM AG, 56271 Mündersbach (DE)
(72) Erfinder: Huismann, Gerd, Dr.Ing., 22045 Hamburg (DE); Goecke, Sven-Frithjof, Dr.-Ing., 56244 Steinen (DE); Hübner, Marc, Dipl.-Ing., 56244 Steinen (DE)
(74) Vertreter: Steiniger, Carmen

(56) Entgegenhaltungen:
- EP-A1- 1 182 001
- DE-A1- 3 731 180
- DE-A1- 3 807 103
- JP-A- 58 212 872
- JP-A- 60 231 573
- JP-A- 63 126 677
- US-A1- 2006 131 291
- US-A1- 2006 138 115

## Beschreibung

Die vorliegende Erfindung betrifft ein Lichtbogenschweißverfahren, wobei ein Draht mittels eines Drahtfördersystems durch ein Kontaktrohr ohne Reversion des Brenners und/oder des Drahtes zu einer Oberfläche eines Werkstückes geführt wird, der Draht an wenigstens einer Kontaktstelle in elektrischen Kontakt mit dem Kontaktrohr gebracht wird und zwischen dem Kontaktrohr und dem Werkstück eine Gleichspannung angelegt wird, sodass bei einem Kontakt eines Drahtendes mit dem Werkstück sowie bei Ausbildung eines Lichtbogens zwischen dem Drahtende und dem Werkstück ein Gleichstrom zwischen dem Kontaktrohr und dem Werkstück fließt, und wobei in einer Startphase der Draht mit wenigstens einer Startdrahtzuführgeschwindigkeit gefördert und dem Werkstück zugeführt wird, und das Drahtende in Kontakt mit dem Werkstück gebracht wird, wonach ein Lichtbogen gezündet und der Draht freigebrannt wird, und in einer quasi-stationären Arbeitsphase der Draht mit einer Prozessdrahtzuführgeschwindigkeit nachgeführt wird, wobei ein Gleichgewicht zwischen Drahtzuführung und Drahtabschmelzung eingestellt wird, siehe z.B. DE 37 31 180 A1. In der Startphase eines Lichtbogenschweißverfahrens mit einer abschmelzenden Drahtelektrode wird ein zunächst kalter Draht mittels eines Drahtfördersystems durch ein Kontaktrohr mit einer vorher eingestellten, zumeist geringen Drahtzuführgeschwindigkeit auf ein Werkstück zubewegt, bis das Drahtende des Drahtes auf die Oberfläche des zu schweißenden Werkstückes auftrifft. Gleichzeitig wird der Draht über das elektrisch mit einem Pol einer Stromquelle verbundene Kontaktrohr mit Spannung beaufschlagt, während ein Schutzgas um den Draht strömt. Der zweite Pol der Stromquelle ist mit dem Werkstück verbunden. Der Bereich des Drahtes, der aus dem Kontaktrohr herausragt, wird als stickout oder freies Drahtende bezeichnet.
Der durch das Kontaktrohr hindurchgeführte Draht ist an mindestens einer Kontaktstelle mit der Innenwand des Kontaktrohrs in elektrischem Kontakt. Somit führt eine Gleichspannung, die zwischen dem Kontaktrohr und dem Werkstück angelegt wird, zu einem Stromfluss über das Kontaktrohr durch den Draht in das Werkstück. Der Stromfluss bewirkt eine gleichmäßige Widerstandserwärmung bzw. Joulesche Erwärmung des aus dem Kontaktrohr ragenden freien Drahtendes des Drahtes. Darüber hinaus wird der Bereich des Drahtes, der in dieser Startphase an der Kontaktstelle an dem Kontaktrohr anliegt, bedingt durch den Kontaktwiderstand zwischen dem Kontaktrohr und dem Draht, lokal stärker als die übrigen Bereiche des Drahtes erwärmt.

Beim Berühren der Werkstückoberfläche durch den Draht entsteht ein Kurzschluss. Ab diesem Zeitpunkt stellt sich bei bekannten Schweißverfahren zwischen dem Kontaktrohr und dem Werkstück ein hoher Stromanstieg dl/dt bis zu einer maximalen Stromstärke ein. Wegen der hohen Stromdichte an der Drahtspitze und des Kontaktwiderstandes zwischen dem werkstückseitigen Ende des Drahtes und dem Werkstück beginnt an der Berührungsstelle zwischen Draht und Werkstückoberfläche Material zu verdampfen und ein Lichtbogen wird gezündet, wonach der Draht beim MIG- oder MAG-Lichtbogenschweißen bei stetiger Drahtnachführung unter Schutzgas abgeschmolzen wird.

Durch das Abschmelzen des Drahtes kommt es zu einem Ablösen von Material von dem Draht und damit zu einem Werkstoffübergang vom Draht zum Werkstück in die auf dem Werkstück ausgebildete Schmelze hinein.

Bei einer hohen Drahtfördergeschwindigkeit in der Startphase kann der zunächst noch sehr kurze Lichtbogen durch den nachgeführten, nachdrückenden Draht wieder durch einen erneuten Kurzschluss erlöschen, sodass ein Aufrechthalten des Lichtbogens erst nach mehreren Anläufen gelingt. Daher wird der Draht in dieser Phase vorzugsweise durch ein sogenanntes Einschleichen langsam an die Oberfläche des Werkstückes herangeführt.

Das Kontaktrohr befindet sich nahe am Lichtbogen, um die Widerstandserwärmung im freien Drahtende, welches sich zwischen Lichtbogen und Kontaktrohr befindet, in Grenzen zu halten. Nach der Ausbildung des Lichtbogens wird der Draht so abgeschmolzen, dass die Länge des Lichtbogens von dem Drahtende zu dem Werkstück größer wird. Man spricht hier von einem Freibrennen des Drahtes durch den Lichtbogen. Nach erfolgtem Freibrennen ist die Startphase beendet.

Nach dem Ausbilden eines stabil brennenden Lichtbogens wird auf die eigentliche, typischerweise im Vergleich zur Startdrahtzuführgeschwindigkeit höhere und im Wesentlichen konstante Prozessdrahtzuführgeschwindigkeit in einer quasi-stationären Arbeitsphase umgeschaltet, in welcher ein Gleichgewicht zwischen der Drahtzuführung und der Drahtabschmelzung eingestellt wird. Diese Vorgehensweise ist beispielsweise auf Fig. 4 der Druckschrift JP 60-231573 ersichtlich, wobei nach der Startphase, in welcher der Draht mit kontinuierlich steigender Drahtzuführungsgeschwindigkeit dem Werkstück zugeführt wird, der konstante hohe Strom der Startphase, welcher eine hohe Drahterwärmung bewirkt, abrupt in einen gepulsten Strom umgeschaltet wird. In der quasi-stationären Arbeitsphase ist im Mittel ein etwa konstantes Temperaturprofil im freien Drahtende vorhanden.

Während der quasi-stationären Arbeitsphase erhält der Draht auf seinem Weg zu der sich am Drahtende bildenden Schmelze mehr und mehr Wärme. Zunächst ergibt sich eine Temperaturerhöhung des freien Drahtendes durch den Wärmeeintrag aufgrund des Kontaktwiderstandes zwischen Kontaktrohr und der Drahtelektrode. Danach erhält der Draht eine Joulesche Erwärmung durch den Schweißstrom. Die Temperatur steigt kontinuierlich in dem freien Drahtende bis hin zu dem erschmolzenen Ende des Drahtes. Bedingt durch die hohen Drahtzuführgeschwindigkeiten beim MIG- oder MAG-Schweißen ist die Wärmeleitung aus dem schmelzflüssigen Drahtende relativ gering. So ergibt sich beispielsweise an dem Drahtende eine Enthalpie von etwa 900 J/g durch die Widerstandserwärmung. Verglichen mit dem Status direkt nach der Startphase, in der das freie Drahtende noch nicht über eine der Förderstrecke vom Kontaktrohr zum Werkstück entsprechende Zeitdauer vom Strom durchflossen und vorgewärmt wurde, ist diese Enthalpie etwa viermal so hoch. Damit ist die Schmelzrate nun bei gleichem Strom wesentlich höher. Wenn die gleichen Schweißprozessparameter verwendet werden, ergibt sich hierdurch, dass die mittlere Lichtbogenlänge viel länger als nach der Lichtbogenzündung ist. Unterschiedliches Schweißverhalten ist die Folge.

Wie bereits oben erwähnt, erfordert die geringe Vorwärmung des Drahtes in der Startphase höhere Ströme, um die gleiche Schmelzgeschwindigkeit wie in der quasi-stationären Arbeitsphase zu erzielen. Der Strom muss daher in der Startphase um etwa 50 % erhöht werden, sodass der Draht in seinem kalten Zustand die gleiche Schmelzgeschwindigkeit aufweist. Dieser Effekt kann in dem Prozess durch hohe Effektivströme nach dem Zünden des Lichtbogens sichtbar werden. Die hohen Ströme bewirken eine starke Joulesche Erwärmung in dem gesamten freien Drahtende. Entsprechend wird beim Zuführen des Drahtes in den Bereich des Lichtbogens eine stark vorgewärmte Zone ausgebildet. Dadurch können auch Bereiche oberhalb des flüssigen Drahtendes aufschmelzen. Hierdurch wird ein langer Lichtbogen ausgebildet oder es kommt zum Lichtbogenabriss.

Wenn der stark überhitzte Drahtbereich das erschmolzene Drahtende erreicht, schmilzt dieser stark ab. Infolgedessen entsteht ein längerer Lichtbogen und dadurch ergibt sich wiederum eine höhere Spannung, welche, aufgrund des geregelten Schweißprozesses, zu einer Niedrigstromphase führt. Der niedrige Strom bewirkt ein verringertes Vorheizen des freien Drahtendes. Nach dem Abschmelzen des stark überhitzten Drahtbereiches kommt der Drahtbereich, welcher in der Niedrigstromphase erhitzt wurde, an das flüssige Drahtende. Dadurch ergibt sich eine niedrige Schmelzgeschwindigkeit.

Der etwa gleichmäßig durch die Widerstandserwärmung erwärmte Drahtabschnitt, der etwa der Länge zwischen dem Werkstück und dem Kontaktrohr in der Startphase entspricht, kann in der quasi-stationären Arbeitsphase mit einem Strom oder mit Strompulsen versehen werden, welche am Drahtende ein Anschmelzen des Drahtes bis zur Ausbildung eines Schmelztropfens bewirken, welcher nach kurzer Zeit von dem Draht abgeschnürt wird und auf das Werkstück unter Ausbildung einer Schweißnaht auftrifft.

Gelangt der Bereich des Drahtes, der an der Kontaktstelle des Drahtes zu dem Kontaktrohr in der Startphase einen höheren Wärmeeintrag erfahren hat, an das Drahtende, wird dieser Bereich aufgrund seiner erhöhten Vorwärmung schneller als die vorhergehenden und nachfolgenden Bereiche des Drahtes abgeschmolzen. Durch das starke Abschmelzen des Drahtes in dem lokal überhitzten Bereich wird abrupt der Abstand zwischen dem Drahtende und der Werkstückoberfläche größer, wodurch es gegebenenfalls sogar zu einem Abreißen des Lichtbogens kommen kann. Ferner kommt es durch das intensivere Abschmelzen des lokal überhitzten Bereiches zu einer verstärkten Spritzerausbildung beim Ablösen dieses Bereiches vom Draht, was ein unvorteilhaftes Schweißergebnis zur Folge hat.

Dieser Effekt, der auf die lokale Übererhitzung eines Bereiches des Drahtes an der Kontaktstelle zum Kontaktrohr während der Startphase des Lichtbogenschweißverfahrens zurückzuführen ist, welcher sich jedoch erst geraume Zeit nach dem Zünden des Lichtbogens bei der Schweißung bemerkbar macht, wird in der Fachwelt auch als Memoryeffekt beschrieben.

Im Stand der Technik gibt es Ansätze, die einer Beschleunigung und/oder Stabilisierung der Startphase dienen sollen. In älteren Schweißanlagen wurden hierzu beispielsweise hohe Ströme und eine damit verbundene hohe Widerstandserwärmung des freien Drahtendes des Drahtes eingesetzt, was jedoch dazu führte, dass das freie Drahtende in der Regel durch die hohe Erwärmung herausgeschleudert wurde, wodurch eine Nacharbeitung der Schweißnaht sowie der Schweißnahtumgebung notwendig wurde.

Ferner ist beispielsweise aus den Druckschriften EP 1 676 664 A1 und US 2006/0131291 A1 ein Starten des Schweißprozesses unter Verwendung eines Brenner- bzw. Drahtrückzugs bekannt, wobei eine direkte Steuerung der Drahtposition möglich ist. Gemäß der Druckschrift EP 1 974 845 A1 kann das Zurückziehen der Drahtelektrode vom Werkstück auch manuell bewirkt werden. Diese Vorgehensweise ist jedoch zur Lösung des eingangs beschriebenen Problems vollkommen ungeeignet, da mit der Regelung der Bewegung der Drahtelektrode aufgrund der Trägheit des Drahtfördersystems nicht schnell genug auf die beim Startprozess auftretenden Veränderungen reagiert werden kann.

Moderne, inverterbasierte Stromquellen können so ausgebildet werden, dass sie hohe Stromanstiege zur Verfügung stellen. Dies ermöglicht es, den Lichtbogen beim Kontaktieren des Werkstückes durch den Draht sofort zu zünden und eine hohe Abschmelzgeschwindigkeit zu erzeugen. Indem in der Startphase mehr Draht abgeschmolzen als zugeführt wird, kann der Lichtbogen geeignet aufgespannt werden, ohne den Draht zurückziehen zu müssen.

In der Vergangenheit traten hierbei hohe Ströme auf. Diese besitzen jedoch den Nachteil, dass sie sich auf das Temperaturprofil an dem Drahtende auswirken. Entsprechend liegen während dieser Phase keine quasi-stationären Bedingungen an dem freien Drahtende vor.

Während des Startens eines Lichtbogenschweißvorganges bei hohem Strom müssen folgende Bedingungen erfüllt sein: Die Zündung des Lichtbogens muss durch den Kontaktwiderstand an dem Drahtende erfolgen. Das Abschmelzen und die Drahtzuführung müssen so eingestellt werden, dass sich ein stabiler Lichtbogen ausbilden kann. Zudem muss ein Temperaturprofil in dem Drahtende eingestellt werden, welches für einen kontinuierlichen, quasi-stationären Prozess geeignet ist. Dabei ist ein ungleichmäßiges Temperaturprofil in dem freien Drahtende in ein vom Kontaktrohr bis zum Schmelztropfen kontinuierlich ansteigendes Temperaturprofil umzuwandeln.

Entsprechend ist beim Starten Folgendes zu beachten: Der Draht ist in der Startphase langsam zu dem Werkstück hinzuführen, um beim Kontaktieren möglichst geringe Kontaktkräfte zu erzielen, um einen hohen Kontaktwiderstand herzustellen, der jedoch nicht so hoch sein darf, dass er isolierend wirkt. Ferner ist ein hoher Stromanstieg zur Verfügung zu stellen. Der Strom ist zumindest so lange auf dem hohen Niveau zu halten, bis eine minimale Lichtbogenlänge ausgebildet werden kann, indem mehr Material aufgeschmolzen als zugeführt wird.

Das hohe Vorwärmen des Drahtes durch den hohen Startstromimpuls führt zu einem anderen Temperaturprofil des Drahtes als in der quasi-stationären Arbeitsphase. Entsprechend ergeben sich die bereits oben aufgeführten Probleme.

Aus der Druckschrift JP 5-261 535 ist ein von den oben beschriebenen DC(Gleichstrom)-Schweißverfahren vollständig abweichendes AC(Wechselstrom)-Schweißverfahren bekannt. Bei diesem Verfahren wird zur Konditionierung der Werkstückseite in der Startphase des Schweißprozesses eine Rampe für die Drahtvorschubgeschwindigkeit und den Anteil der negativen Phase (EN) des Wechselstroms verwendet. Mit dieser Vorgehensweise sollen das Auftreten von Schlacke, die Lichtbogeninstabilität während der Startphase und ein ungenügender Einbrand behoben werden. Dabei sind die in dieser Druckschrift beschriebenen Probleme von der Art der Drahtoberfläche und vom Schutzgas abhängig. Eine brennerseitige Betrachtung erfolgt in dieser Druckschrift nicht.

Die Druckschrift DE 37 31 180 A1 beinhaltet ein Schweißverfahren und eine zugehörige Vorrichtung, welche die Aufgabe haben, ein spritzerfreies Schweißen zu ermöglichen. Die vorgeschlagene Lösung besteht darin, dass zum Starten des Schweißvorganges zunächst ein Schutzgasstrom und ein Drahtvorschub mit niedriger Einschleichgeschwindigkeit eingeschaltet werden.

In dem in der Druckschrift DE 37 31 180 A1 beschriebenen Schweißverfahren wird die Energiequelle nach dem Kontakt der Drahtelektrode mit dem Werkstück erst mit einem niedrigen Konstantstrom betrieben, und der Drahtvorschub wird entweder gestoppt oder mit niedriger Geschwindigkeit betrieben. Anschließend wächst die Lichtbogenlänge und die Spannung an der Schweißelektrode steigt entsprechend an. Beim Erreichen eines einstellbaren Schwellwertes erzeugt die Energiequelle einen definierten Stromimpuls, der die Ablösung des mehr oder weniger großen Tropfens, der sich am Elektrodenende bildet, bewirkt. Nach der Tropfenablösung durch den Stromimpuls werden die Drahtvorschubgeschwindigkeit und der geregelte Schweißstrom kontinuierlich und aufeinander abgestimmt erhöht.

Das Schweißverfahren kann ein Gleichstrom- oder Pulsverfahren sein, wobei die Abschmelzleistung am Schweißdraht durch eine Strombegrenzung und/oder eine Pulslängenmodulation geregelt werden kann. Bei der Regelung des Schweißprozesses werden des Weiteren die mechanische Verzögerung des Schweißdrahtes, die sogenannte Totzeit, die Drahthochlaufgeschwindigkeit, die Stromanstiegsgeschwindigkeit, Puls-Arc-Parameter, die Prozess-Sollspannung, die Ist-Schweißspannung, der Startstrom, die Draht-Einschleichgeschwindigkeit und ein Startsignal beachtet.

Es ist daher die Aufgabe der vorliegenden Erfindung, ein zuverlässiges und praktikabel anwendbares Lichtbogenschweißverfahren sowie eine Schweißvorrichtung zum Ausführen des Lichtbogenschweißverfahrens zur Verfügung zu stellen, in welchen die Auswirkungen einer lokalen Übererhitzung eines Drahtbereiches an einer Kontaktstelle zu dem Kontaktrohr auf den Schweißvorgang und das Schweißergebnis minimiert werden können.

Die Aufgabe wird durch ein Lichtbogenschweißverfahren der oben genannten Gattung gelöst, wobei in der quasi-stationären Arbeitsphase die elektrischen Schweißstromparameter und/oder die Drahtzuführgeschwindigkeit an eine aktuelle Vorwärmung des Drahtes an dem Kontaktrohr angepasst werden. Somit können auch in der quasi-stationären Arbeitsphase, ebenso wie in der vorhergehenden Übergangsphase, vorliegende unterschiedliche Vorwärmungen des Drahtes durch eine geeignete Einstellung der Prozessdrahtzuführgeschwindigkeit und eine daran angepasste Einstellung der Schweißstromparameter ausgeglichen werden.

Selbstverständlich ist das erfindungsgemäße Verfahren nicht nur auf das Metallschutzgasschweißen (MSG) beschränkt sondern kann ebenso für das aus dem Stand der Technik bekannte Unter-Pulver-Schweißen verwendet werden. Zudem können alle oben aufgeführten Verfahrensschritte sowohl bei Schweiß- als auch bei Lötverfahren und entsprechenden Vorrichtungen eingesetzt werden.

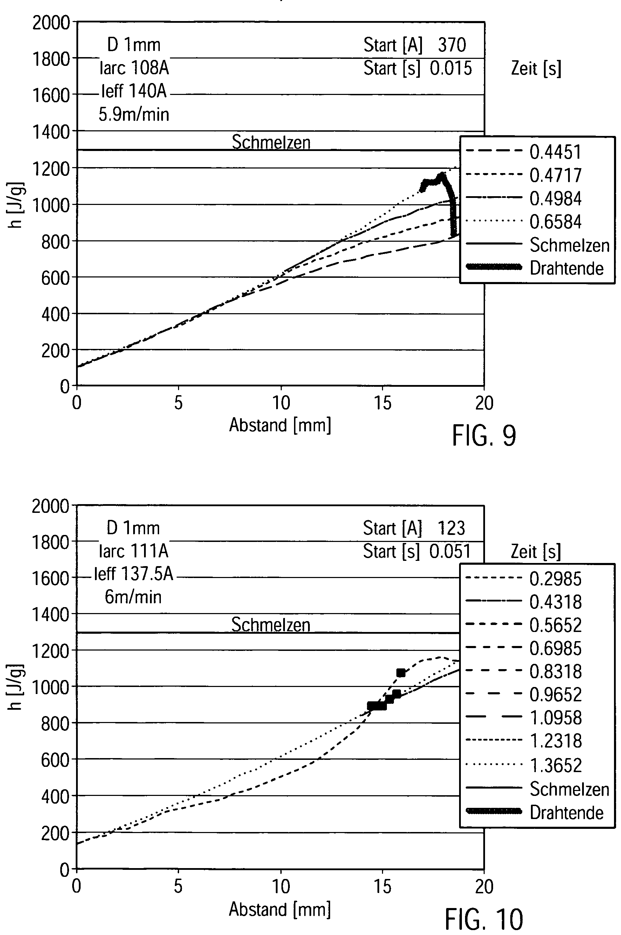

Vorteilhafte Ausführungsformen der vorliegenden Erfindung, deren Funktion und die damit erzielbaren Ergebnisse werden im Folgenden anhand der Figur 10 der Zeichnung näher erläutert, wobei
- Figur 1: schematisch ein Einschleichen eines Drahtes in einer zeigt;
- Figur 2: schematisch ein Auftreffen eines Drahtes auf einer Werkstückoberfläche unter Zünden eines Lichtbogens in einer zeigt;
- Figur 3: schematisch die Anordnung aus den Figuren 1 und 2 während einer zwischen der Startphase und der quasi-stationären Arbeitsphase vorgesehenen Übergangsphase zeigt;
- Figur 4: schematisch die Anordnung für ein Lichtbogenschweißverfahren aus den Figuren 1 bis 3 in einer der Übergangsphase folgenden quasi-stationären Arbeitsphase zeigt;
- Figur 5: anhand eines Ausführungsbeispiels in einer grafischen Darstellung den Lichtbogenstrom, die Schmelzgeschwindigkeit des Drahtes sowie die Drahtzuführgeschwindigkeit in einer zwischen einer Startphase und einer Arbeitsphase liegenden Übergangsphase eines Lichtbogenschweißvertahrens zeigt;
- Figur 6: in einer grafischen Darstellung eine Enthalpieverteilung an einem freien Drahtende eines Drahtes gemäß dem Stand der Technik zeigt;
- Figur 7: im Vergleich zu Figur 6 in einer grafischen Darstellung anhand eines Ausführungsbeispiels der vorliegenden Erfindung eine Enthalpieverteilung an einem freien Drahtende eines Drahtes in einer Übergangsphase zeigt;
- Figur 8: in einer grafischen Darstellung anhand eines Ausführungsbeispiels eine Enthalpieverteilung an einem freien Drahtende kurz nach Beginn einer Übergangsphase zeigt;
- Figur 9: in einer grafischen Darstellung anhand eines Ausführungsbeispiels eine Enthalpieverteilung an einem freien Drahtende am Ende einer Übergangsphase und zu Beginn der quasi-stationären Arbeitsphase zeigt; und
- Figur 10: schematisch einen Wärmeinhalt eines freien Drahtendes nach Abschmelzen der ersten Länge zwischen Kontaktrohr und Werkstück am Ende der Übergangsphase und im quasi-stationären Zustand anhand eines Ausführungsbeispiels der vorliegenden Erfindung zeigt.

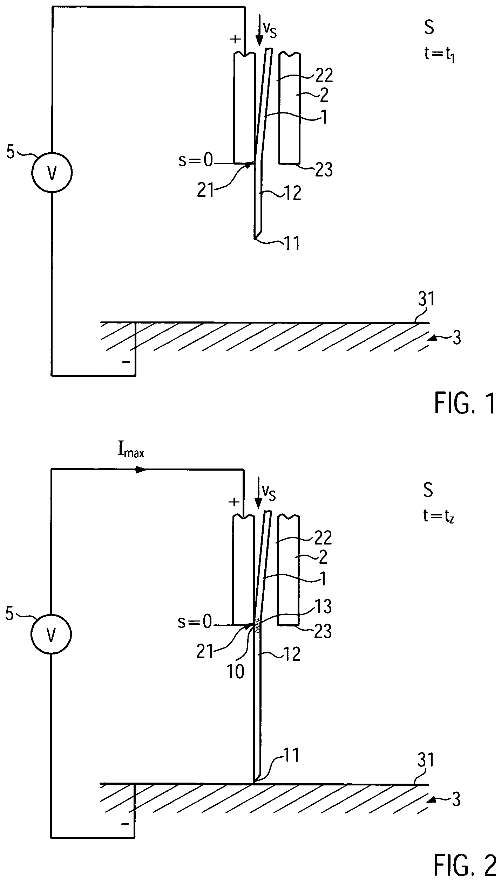

Figur 1 zeigt schematisch ein so genanntes Einschleichen eines zunächst gleichmäßig Raumtemperatur aufweisenden, draht- oder bandförmigen Drahtes 1 an eine Oberfläche 31 eines Werkstückes 3 während einer Startphase S zu einem willkürlich gewählten Zeitpunkt t = t₁. Hierfür wird der Draht 1 durch ein Kontaktrohr 2 geführt, wobei der Draht 1 bedingt durch den hier nicht gezeigten Zuführungsmechanismus des Drahtes 1 nicht völlig gerade durch eine Öffnung 22 in dem Kontaktrohr 2 hindurchgeht, sondern eine sogenannte Dressur aufweist. Dadurch liegt der Draht 1 an wenigstens einer Kontaktstelle 21 am Material des Kontaktrohrs 2 in elektrischem Kontakt an. An dem Kontaktrohr 2 liegt dabei der der Pluspol einer Stromquelle 5 an, während der Minuspol dieser Stromquelle 5 an dem Werkstück 3 anliegt.

Während des Einschleichens des Drahtes 1 weist dieser vorzugsweise eine geringe Startdrahtzuführgeschwindigkeit vₛ auf. In anderen Ausführungsvarianten ist es jedoch auch grundsätzlich möglich, dass der Draht 1 mit einer höheren Geschwindigkeit auf das Werkstück 3 zubewegt und kurz vor Auftreffen des Drahtes 1 auf dem Werkstück 3 die Geschwindigkeit des Drahtvorschubs verringert oder der Draht 1 etwas zurückgezogen wird.

Durch eine geringe Startdrahtzuführgeschwindigkeit vₛ können beim Auftreffen des Drahtes 1 auf dem Werkstück 3 niedrige Kontaktkräfte erzeugt werden, welche zu einem hohen Kontaktwiderstand zwischen dem Draht 1 und dem Werkstück 3 führen. Infolge des hohen Kontaktwiderstandes ist wiederum eine hohe Temperatur an der Kontaktstelle zwischen dem Draht 1 und dem Werkstück 3 beim Durchführen eines Gleichstromes I erzielbar, sodass zwischen dem Draht 1 und dem Werkstück 3 ein Lichtbogen 4 zünd- und aufspannbar ist.

Ferner wird durch die geringe Startdrahtzuführgeschwindigkeit v_{S} in der Startphase S ein Aufstauen von Draht 1 in dem Fördersystem der Lichtbogenschweißanlage verhindert. Zudem kann durch die geringe Startdrahtzuführgeschwindigkeit v_{S} geeignet ein Nullpunkt s = 0 für die Bestimmung eines Drahtweges s festgelegt werden, welcher im weiteren Verlauf des Lichtbogenschweißverfahrens genutzt werden kann, um beispielsweise die Länge des Drahtes 1 zu bestimmen, die der Strecke zwischen dem Kontaktrohr 2 und dem Tropfenansatz an dem Draht 1 entspricht, um diese geeignet abschmelzen zu können.

Figur 2 zeigt schematisch ein Auftreffen des Drahtes 1 auf der Oberfläche 31 des Werkstückes 3 während der Startphase S zu einem Zündzeitpunkt t = t_{z}. Zwischen dem Werkstück 3 und dem Kontaktrohr 2 liegt eine Gleichspannung V an, wobei in dem gezeigten Beispiel an dem Kontaktrohr 2 der Pluspol und an dem Werkstück 3 der Minuspol der Stromquelle 5 anliegt. Der Bereich des Drahtes 1 zwischen einem unteren Ende bzw. einer Unterkante 23 des Kontaktrohrs 2 und dem Drahtende 11 des Drahtes bzw. dem Ansatzpunkt des Lichtbogens 4 wird als stickout oder freies Drahtende 12 bezeichnet. Bedingt durch den hohen Kontaktwiderstand zwischen dem Draht 1 und dem Werkstück 3 wird, wie in Figur 2 angedeutet, ein Lichtbogen 4 zwischen dem Draht 1 und dem Werkstück 3 gezündet. Das freie Drahtende 12 und der Lichtbogen 4 sind in der Praxis von einem Schutzgas umgeben, welches der Übersichtlichkeit halber in den Figuren nicht dargestellt ist.

Zum Zünden des Lichtbogens 4 wird über das Kontaktrohr 2 in den Draht 1 ein Gleichstrom mit einer in dem gezeigten Beispiel voreinstellbaren maximalen Stromstärke Iₘₐₓ geleitet. Dieser führt zu einer Widerstandserwärmung bzw. Jouleschen Erwärmung des Drahtes 1. Darüber hinaus wird ein Drahtbereich 13 des Drahtes 1, welcher an der Kontaktstelle 21 zwischen dem Draht 1 und dem Kontaktrohr 2 anliegt, bedingt durch den hohen Kontaktwiderstand an der Kontaktstelle 21, besonders stark erwärmt.

Nach der Zündung des Lichtbogens 4 erfolgt am Ende der Startphase S ein Freibrennen des Drahtes 1 durch den Lichtbogen 4. Während dieses Freibrennens ist es das Ziel, eine minimale Lichtbogenlänge L zu erstellen, welche ein kontrolliertes Abschmelzen des Drahtes 1 ermöglicht. Auf diese Weise wird stromkorreliert eine definierte Abschmelzlänge des Drahtes 1 erzeugt. Ferner wird während des Freibrennvorganges der Draht 1, der zu Beginn der Startphase S noch kalt war, durch Widerstandserwärmung vorgewärmt. Bei dem Freibrennen sind die Schweißstromparameter, wie der variabel einstellbare Schweißstromstärke, so einzustellen, dass die Temperaturübererhöhung in dem Draht 1 an der Kontaktstelle 21 in der Nähe zu dem Kontaktrohr 2 möglichst gering ist.

Während des Freibrennvorganges soll möglichst kein längerer Kurzschluss zwischen dem Draht 1 und dem Werkstück 3 auftreten. Auf diese Weise kann die Hauptwärme in das Drahtende 11 für ein geeignetes Abschmelzen des Drahtes 1 geleitet werden, während bei längeren Kurzschlüssen die Hauptwärmeeinleitung in Kontaktrohrnähe erfolgen würde.

Ferner ist bei dem Freibrennvorgang darauf zu achten, dass das Drahtende 11 des Drahtes 1 möglichst spitz ist, sodass bei einem Auftreffen des Drahtendes 11 auf dem Werkstück 3 ein möglichst hoher Kontaktwiderstand vorliegt.

In der Freibrennphase sind auftretende Kurzschlussphasen vorzugsweise zu überwachen, da diese zu einer Überhitzung des Drahtes 1 an der Kontaktstelle 21 durch den Kontaktwiderstand führen, welche weitgehend verhindert werden soll. Darüber hinaus ist es denkbar, in der Freibrennphase die Länge L des Lichtbogens 4 bzw. die Ausbildung und Form des flüssigen Drahtendes 11 zu überwachen, da sich hierdurch Rückschlüsse auf eine eventuell zu hohe Vorwärmung des Drahtes 1 ergeben.

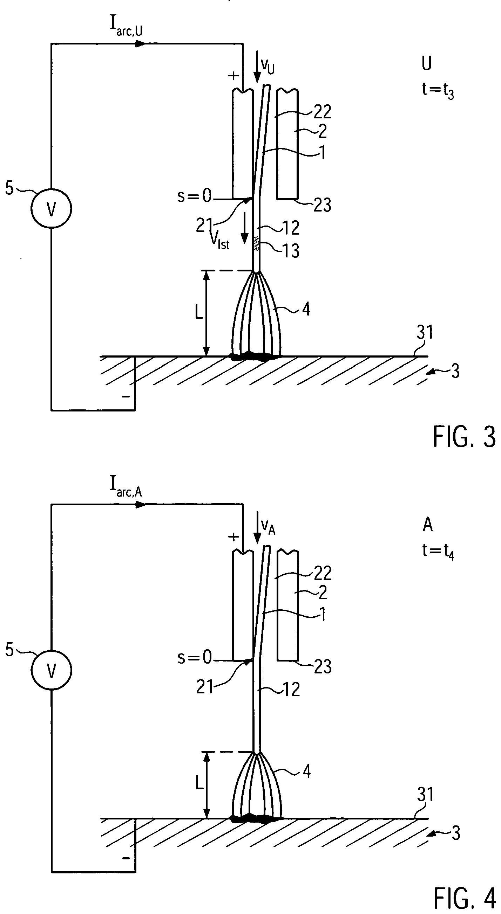

Figur 3 zeigt schematisch die Anordnung aus den Figuren 1 und 2 während einer auf die Startphase S folgenden Übergangsphase U zu einem willkürlich gewählten Zeitpunkt t = t₃, in welchem sich der stark erwärmte Drahtbereich 13 zwischen der Kontaktstelle 21 und dem Drahtende 11 befindet.

In der Übergangsphase U wird die Drahtzuführgeschwindigkeit v_{U} des Drahtes 1 nicht abrupt, wie im Stand der Technik, sondern über einen Zeitraum hinweg, allmählich oder schrittweise von der Startdrahtzuführgeschwindigkeit v_{S} auf eine in der auf die Übergangsphase folgenden quasi-stationären Arbeitsphase A verwendete Prozessdrahtzuführgeschwindigkeit v_{A} gebracht, wobei parallel dazu in der Übergangsphase die Schweißparameter in Korrelation zu der Drahtzuführgeschwindigkeit v_{U} eingestellt werden.

Figur 4 zeigt schematisch die Anordnung für ein Lichtbogenschweißverfahren aus den Figuren 1 bis 3 in einer quasi-stationären Arbeitsphase A. Hier ist der Drahtbereich 13 mit erhöhter Vorwärmung bereits durch Abschmelzen von dem Draht 1 abgelöst. Der Draht 1 wird mit im Wesentlichen konstanter Prozessdrahtzuführgeschwindigkeit v_{A} dem Werkstück 3 zugeführt. Durch den Draht 1 fließt ein gepulster oder ungepulster Schweißstrom I_{arc,A}. Während der quasi-stationären Arbeitsphase A besteht ein weitgehendes Gleichgewicht von Drahtzuführung und Drahtabschmelzung und im Mittel ein etwa konstantes Temperaturprofil im freien Drahtende 12.

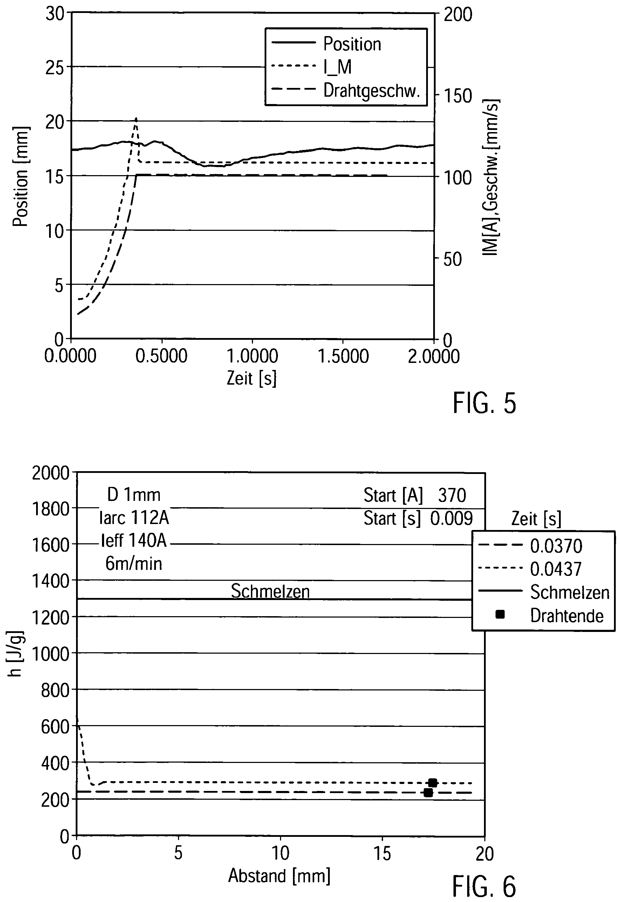

Die Vorgehensweise wird im Folgenden anhand konkreter, in den Figuren 5 bis 10 gezeigter Beispiele nochmals verdeutlicht.

Figur 5 zeigt anhand eines Ausführungsbeispiels eines Lichtbogenschweißverfahrens in einer grafischen Darstellung einen geeigneten Zusammenhang zwischen dem mittleren Schweißstrom I_{M}, der Abschmelzgeschwindigkeit des Drahtes 1 und der Drahtzuführgeschwindigkeit v_{U} in der Übergangsphase U bei einem gepulsten Betrieb.

Wie in Figur 5 zu sehen, wird in der Übergangsphase U die Drahtzuführgeschwindigkeit v_{U} als auch der mittlere Schweißstrom I_{M} rampenartig erhöht. Die Drahtzuführgeschwindigkeit v_{U} wird dabei allmählich von der geringen Startdrahtzuführgeschwindigkeit v_{S} in der Startphase S auf die Prozessdrahtzuführgeschwindigkeit v_{A} in der quasi-stationären Arbeitsphase A des Lichtbogenschweißverfahrens verändert. Die Änderung von Drahtzuführgeschwindigkeit und Strom kann sowohl kontinuierlich, wie in Figur 5, als auch schritt- bzw. stufenweise erfolgen. Nach einer Zeit t von etwa 0,45 s werden in dem gezeigten Beispiel sowohl die Drahtzuführgeschwindigkeit v_{U} als auch der Schweißstrom I_{M} auf einen etwa konstanten Wert eingestellt. Dabei ist die Änderung des mittleren Schweißstroms I_{M} auf die Änderung der Drahtzuführgeschwindigkeit v_{U} abgestimmt.

Im Ergebnis passt sich die Abschmelzgeschwindigkeit des Drahtes 1 an die Drahtzuführgeschwindigkeit v_{U} und die darauf abgestimmten Schweißstromparameter an. Der in Figur 5 dargestellte mittlere Schweißstrom I_{M} kann dabei durch die Schweißstromparameter, wie die Pulsstromhöhe, Pulsstromdauer, die Pulsfrequenz und/oder die Grundstromhöhe, in Anpassung an die Drahtzuführgeschwindigkeit v_{U} eingestellt werden.

Die in Figur 5 dargestellte Übergangsphase U des Lichtbogenschweißverfahrens führt nach dem am Ende der Startphase S stattfindenden Freibrennen des Drahtes 1 durch den Lichtbogen 4 zunächst zu einem Abschmelzen einer Länge des Drahtes 1, die der Strecke zwischen dem Kontaktrohr 2 und dem Topfenansatz an dem Drahtende 11 des Drahtes 1 entspricht. Während dieses Abschmelzvorgangs wird die Übertemperatur des Drahtbereiches 13, welcher beim Freibrennen des Lichtbogens 4 Zusatzwärme aus dem Kontaktwiderstand an der Kontaktstelle 21 erfahren hatte, durch Wärmeleitung bzw. Zeit allmählich abgebaut. Dies erfordert es allerdings, dass während der Abschmelzphase nicht mit der vollen, für die quasi-stationäre Arbeitsphase A üblichen Drahtzuführgeschwindigkeit v_{A} gearbeitet wird. Somit kann der Drahtbereich 13 allmählich an das Drahtende 11 geführt werden, ohne dass es zu einem vorzeitigen oder intensiveren Abschmelzen des Drahtes 1 an dem Drahtbereich 13 kommt.

Während des Abschmelzvorgangs des Drahtes 1 in der Übergangsphase U wird die Drahtzuführgeschwindigkeit v_{U} stückweise oder allmählich gesteigert, um die Einlaufphase zu verkürzen. Dabei werden die Schweißstromparameter des Lichtbogenschweißprozesses in Korrelation zu der Drahtzuführgeschwindigkeit v_{U} und zu der aktuellen Vorwärmung des Drahtes 1 vor dem erschmolzenen Drahtende 11 eingestellt. Vorzugsweise werden hierbei Schweißparameter, wie im ungepulsten Betrieb die Schweißstromhöhe und im gepulsten Betrieb die Pulsstromhöhe, die Pulsstromdauer, die Pulsfrequenz und/oder die Grundstromhöhe, so eingestellt, dass ein möglichst kurzschlussarmer Werkstofftransport von dem Draht 1 zu dem Werkstück 3 ermöglicht wird. Das heißt, der Strom bzw. die Strompulse werden vorzugsweise so eingestellt, dass ein Abtrennen des Schmelztropfens möglichst ohne Kontakt des Drahtes 1 zu dem Werkstück 3 erfolgt. Ins-besondere werden dabei Anfangsstrompulse mit einem geringeren Pulsstrom als in der quasi-stationären Arbeitsphase A verwendet.

In einer hier nicht dargestellten Ausführungsform wird in der Übergangsphase U des Lichtbogenschweißverfahrens der Drahtbereich 13, welcher zusätzliche Wärme aus dem Kontaktwiderstand zwischen dem Draht 1 und dem Kontaktrohr 2 an der Kontaktstelle 21 erfahren hat, abgeschmolzen. Zum Abschmelzen des Drahtbereiches 13 wird die Lichtbogenlänge L so eingestellt, dass die im Vergleich zu der Drahtzuführgeschwindigkeit v_{U} erhöhte Abschmelzrate des Drahtes 1 an dem Drahtbereich 13 kompensiert wird. Ferner ist beim Abschmelzen des Drahtbereiches 13 erhöhter Temperatur der Strom-Zeitverlauf in Korrelation zu der Drahtzuführgeschwindigkeit v_{U} so abzustimmen, dass es nicht zu einer Aufschmelzung des Drahtes 1 weit oberhalb des erschmolzenen Drahtendes 11 kommt. Dabei ist es von Vorteil, wenn die Drahtzuführgeschwindigkeit v_{U} so gesteigert wird, dass die erhöhte Abschmelzgeschwindigkeit des Drahtbereiches 13 kompensiert wird.

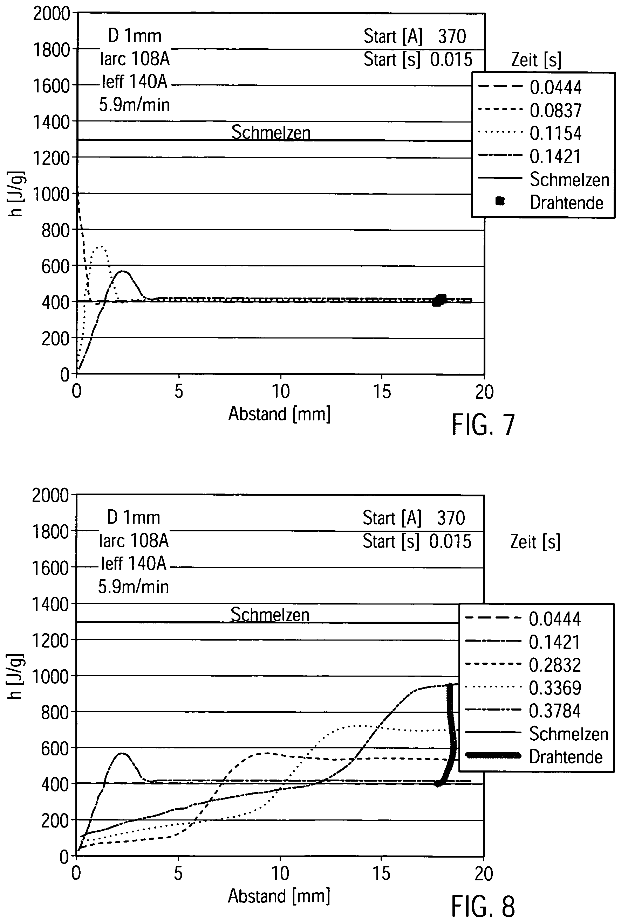

Figur 6 zeigt eine Enthalpieverteilung an dem stickout 12 während eines normalen Schweißverfahrens, wie es im Stand der Technik angewandt wird, und Figur 7 im Vergleich dazu eine Enthalpieverteilung an dem stickout 12 während der Start- und der Übergangsphase S bzw. U gemäß einer Ausführungsform des Lichtbogenschweißverfahrens.

Wie in Figur 6 gezeigt, weist der stickout-Bereich 12 insbesondere an dem Drahtende 11, hier in einem Abstand s von etwa 17,5 mm Entfernung von dem unteren Ende 23 des Kontaktrohrs 2, eine hohe Enthalpie auf, die an dem Drahtende 11 zu einem Abschmelzen und einem Werkstofftransport von dem Draht 1 auf das Werkstück 3 führt. Zudem besitzt der Draht 1 nahe dem Kontaktrohr 2, in dem gezeigten Beispiel in einem Abstand s von 0 mm bis etwa 1 mm von dem Kontaktrohr 2, eine erhöhte Enthalpie, bedingt durch den hohen Kontaktwiderstand zwischen dem Kontaktrohr 2 und dem Draht 1. Würde der Draht 1 direkt im Anschluss an diese Startbedingungen mit der für die quasi-stationäre Arbeitsphase A üblichen Drahtzuführgeschwindigkeit v_{A} an das Drahtende 11 transportiert werden und dabei durch einen hohen Strom zusätzlich zu der bereits erfolgten Vorwärmung an dem Kontaktrohr 2 eine weitere Widerstandserwärmung erfolgen, könnte der Draht 1 in dem Drahtbereich 13 übermäßig erwärmt werden, was zu einem vorzeitigen oder zu einem besonders intensiven Abschmelzen des Drahtbereiches 13 führen kann.

Dem beugt das Ausführungsbeispiel, wie es in Figur 7 gezeigt ist, vor. Durch die zwar im Vergleich zu der Startphase S erhöhte, aber noch nicht auf die Prozessdrahtzuführgeschwindigkeit v_{A} gesteigerte Drahtzuführgeschwindigkeit v_{U} in der Übergangsphase U wird der Drahtbereich 13 erhöhter Temperatur allmählich zu dem Drahtende 11 hinbewegt, wodurch sich durch Wärmeleitung und Zeit die in dem Drahtbereich 13 aufgenommene Enthalpie allmählich in dem Draht 1 verteilt, und sich insbesondere der Spitzenwert der Enthalpie in dem Drahtbereich 13 Stück für Stück verringert. Zusätzlich erfolgt eine Widerstandserwärmung des Drahtes 1 durch den zugeführten Strom. Werden die Drahtzuführgeschwindigkeit v_{U} und die darauf abgestimmten Schweißstromparameter des Lichtbogenschweißverfahrens in der Übergangsphase U geeignet eingestellt, kann sich die Enthalpie bzw. die Temperatur des zu Beginn übererhitzten Drahtbereiches 13 allmählich an die Enthalpie bzw. die Temperatur des Drahtes 1 in den übrigen Drahtbereichen angleichen. Im Ergebnis kann ein vorzeitiges bzw. intensiveres Abschmelzen des Drahtbereiches 13 weitgehend eliminiert werden, sodass Prozessstörungen während des Schweißens und/oder ein Abreißen des Lichtbogens 4 weitgehend verhindert werden können.

Nach dem Abschmelzen des Drahtbereiches 13 ist die Übergangsphase U beendet und die quasi-stationäre Arbeitsphase A tritt ein. Dieser Zustand ist in dem in Figur 10 gezeigten Beispiel etwa nach 0,6 s nach dem Start erreicht.

Figur 8 zeigt anhand eines Ausführungsbeispiels des Lichtbogenschweißverfahrens eine Enthalpieverteilung an dem stickout 12 analog zu Figur 7, aber über einen längeren Zeitbereich.

Wie in Figur 8 dargestellt, wandert der Drahtbereich 13 erhöhter Temperatur allmählich an das Drahtende 11, ohne jedoch vorzeitig den in der Abbildung oben dargestellten Schmelzpunkt zu erreichen. Vielmehr gleicht sich die Temperatur des Drahtbereiches 13 allmählich an die Temperatur der übrigen Drahtbereiche des Drahtes 1 an.

Wie es aus Figur 9 hervorgeht, ist am Ende der Übergangsphase U, nach dem Abschmelzen einer Drahtlänge, die etwa der Strecke zwischen dem Kontaktrohr 2 und dem Tropfenansatz entspricht, ein stetig steigender Temperaturverlauf an dem freien Drahtende 12 vorhanden, welcher sich allmählich an den in der quasi-stationären Arbeitsphase A im vorliegenden Temperaturverlauf an den Draht 1 annähert.

Figur 10 zeigt anhand eines Ausführungsbeispiels des erfindungsgemäßen Lichtbogenschweißverfahrens einen Wärmeinhalt eines freien Drahtendes bzw. stickouts 12 nach einem Abschmelzen der ersten Länge zwischen dem Kontaktrohr 2 und dem Werkstück 3 und in der darauf folgenden quasi-stationären Arbeitsphase A. Dabei unterscheidet sich die Enthalpieverteilung nach dem Abschmelzen der Strecke zwischen dem Kontaktrohr 2 und dem Werkstück 3 nur noch unwesentlich von der gleichmäßig ansteigenden Enthalpieverteilung in dem Draht 1 im quasi-stationären Zustand.

Nach dem Abschmelzen des Drahtbereiches 13, welcher zusätzliche Wärme aus dem Kontaktwiderstand an der Kontaktstelle 21 zwischen dem Draht 1 und dem Werkstück 3 erfahren hat, erfolgt ein Übergang von der Übergangsphase U zu der quasi-stationären Arbeitsphase A. So liegt nach dem Abschmelzen einer Drahtlänge, äquivalent zu der Strecke zwischen dem Kontaktrohr 2 und dem Werkstück 3, ein stetig steigender Temperaturverlauf in dem freien Drahtende 12 vor. Die Form des Temperaturverlaufes ist, wie in Figur 9 und 10 dargestellt, nur geringfügig unterschiedlich zum quasi-stationären Endzustand des Lichtbogenschweißverfahrens. Die Vorwärmung nimmt nur leicht mit steigendem Drahtvorschub, stromangepasst, zu. Ferner können Pulsparameter mit höheren Pulsströmen zu einem Anstieg der Widerstandserwärmung in dem Draht 1 führen. Diese Änderungen sind jedoch klein gegenüber dem kalten Ausgangszustand.

Aufgrund der geringen Unterschiede in der Enthalpieverteilung am Ende der Übergangsphase U im Vergleich zu der quasi-stationären Arbeitsphase A kann grundsätzlich der Übergang von der Drahtzuführgeschwindigkeit v_{U} in der Übergangsphase U zu der Prozessdrahtzuführgeschwindigkeit v_{A} in der quasi-stationären Arbeitsphase A sprungartig erfolgen, wenn die Drahtzuführgeschwindigkeit und die Pulsparameter synchron geändert werden. Wenn möglich, sollte die Änderung der Drahtzuführgeschwindigkeit jedoch kontinuierlich erfolgen. Dabei muss jedoch berücksichtigt werden, dass im Schweißprozess die Drahtgeschwindigkeit an dem Kontaktrohr 2 maßgebend ist, wobei die Drahtgeschwindigkeit an dem Kontaktrohr 2 meist nicht der Geschwindigkeit des Drahtes 1 an den Drahtförderrollen des Drahtfördersystems der Lichtbogenschweißanlage entspricht. Die Drahtgeschwindigkeiten sind über ein flexibles System gekoppelt. Dieser Unterschied kann dadurch kompensiert werden, indem die Ist-Zuführgeschwindigkeit v_{Ist} des Drahtes 1 nahe dem Kontaktrohr 2 erfasst wird und die Pulsparameter des Schweißprozesses an diese Ist-Zuführgeschwindigkeit v_{Ist} angepasst werden.

Ferner ergibt sich aus dem Unterschied der Drahtzuführgeschwindigkeiten die Notwendigkeit in der praktischen Anwendung, dass eine Anhebung der Drahtzuführgeschwindigkeit v über einen Mindestzeitraum erfolgt.

Das oben beschriebene Lichtbogenschweißverfahren kann noch vorteilhafter ausgeführt werden, wenn in der Startphase S zur Lichtbogenzündung ein kurzer Strompuls mit maximaler Stromstärke Iₘₐₓ eingestellt wird, wobei die Stromstärke Iₘₐₓ in Abhängigkeit von den Werkstoffeigenschaften des Drahtes, dem Drahtdurchmesser und der Drahtoberfläche eingestellt wird, bis eine Drahtoberfläche 10 des Drahtes 1 an der Kontaktstelle 21 zu dem Kontaktrohr 2 angeschmolzen ist und daraufhin der Strom I unmittelbar derart verringert wird, dass ein Wärmeeintrag in den Draht 1 an der Kontaktstelle 21 minimiert wird. Durch das Anschmelzen der Drahtoberfläche 10 des Drahtes 1 an der Kontaktstelle 21 kann hier der Kontaktwiderstand derart verringert werden, dass die Ohmsche Erwärmung des Drahtes 1 an dem Bereich der Kontaktstelle 21 stark verringert wird. Damit ist die Enthalpie des Drahtbereiches 13, der durch den Kontaktwiderstand eine erhöhte Temperatur aufweist, geringer, so dass der oben beschriebene Memoryeffekt beim Abschmelzen des Drahtes 1 weniger stark wirksam wird. Infolge dessen können auch durch diesen Schritt Prozessstörungen und Schweißinhomogenitäten beim Abschmelzen des Drahtbereiches 13 minimiert werden.

Die oben beschriebenen Maßnahmen führen sowohl einzeln als auch in ihrer Kombination zu einer Stabilisierung des Schweißprozesses, wobei insbesondere die Anfangsphase des Lichtbogenschweißprozesses gleichmäßiger und mit geringerem Auswurf von Schweißzusatz gestaltet werden kann.

Die oben für die Startphase S und die Übergangsphase U des Lichtbogenschweißverfahrens angegebenen Verfahrensschritte werden erfindungsgemäß in der quasi-stationären Arbeitsphase A angewendet, wobei die elektrischen Schweißstromparameter und/oder Prozessdrahtzuführgeschwindigkeit v_{A} während der quasi-stationären Arbeitsphase A an eine aktuelle Vorwärmung des Drahtes 1 an dem Kontaktrohr 2 angepasst werden. Auf diese Weise können unterschiedliche Vorwärmungen des Drahtes 1 durch eine geeignete Einstellung der Prozessdrahtzuführgeschwindigkeit v_{A} und eine daran angepasste Einstellung der elektrischen Schweißstromparameter im gepulsten als auch im ungepulsten Betrieb ausgeglichen werden. Hierfür können die gleichen Prozessschritte wie in der oben beschriebenen Übergangsphase U analog angewendet werden, wobei zur Vermeidung von Wiederholungen explizit auf die oben erfolgten Ausführungen verwiesen wird. Im Ergebnis kann auch die quasi-stationäre Arbeitsphase A stabiler gestaltet werden und ein Schweißergebnis mit hoher Qualität zur Verfügung gestellt werden.

## Patentansprüche

1. Lichtbogenschweißverfahren, wobei ein Draht (1) mittels eines Drahtfördersystems durch ein Kontaktrohr (2) ohne Reversion des Brenners und/oder des Drahtes (1) zu einer Oberfläche (31) eines Werkstückes (3) geführt wird, der Draht (1) an wenigstens einer Kontaktstelle (21) in elektrischen Kontakt mit dem Kontaktrohr (2) gebracht wird und zwischen dem Kontaktrohr (2) und dem Werkstück (3) eine Gleichspannung (V) angelegt wird, sodass bei einem Kontakt eines Drahtendes (11) mit dem Werkstück (3) sowie bei Ausbildung eines Lichtbogens (4) zwischen dem Drahtende (11) und dem Werkstück (3) ein Gleichstrom (I) zwischen dem Kontaktrohr (2) und dem Werkstück (3) fließt, und wobei
in einer Startphase (S) der Draht (1) mit wenigstens einer Startdrahtzuführgeschwindigkeit (v_{S}) gefördert und dem Werkstück (3) zugeführt wird, und das Drahtende (11) in Kontakt mit dem Werkstück (3) gebracht wird, wonach ein Lichtbogen (4) gezündet und der Draht (1) freigebrannt wird, und
in einer quasi-stationären Arbeitsphase (A) der Draht (1) mit einer Prozessdrahtzuführgeschwindigkeit (v_{A}) nachgeführt wird, wobei ein Gleichgewicht zwischen Drahtzuführung und Drahtabschmelzung eingestellt wird,
**dadurch gekennzeichnet,**
**dass** in der quasi-stationären Arbeitsphase (A) die elektrischen Schweißstromparameter und/oder die Prozessdrahtzuführgeschwindigkeit (v_{A}) an eine aktuelle, vor dem erschmolzenen Drahtende erfasste Vorwärmung des Drahtes (1) an dem Kontaktrohr (2) angepasst werden.

## Claims

1. Arc welding method, wherein a wire (1) is led to a surface (31) of a work piece (3) through a contact pipe (2) by means of a wire conveying system without reversion of the burner and/or the wire (1), the wire (1) is brought into electrical contact with the contact pipe (2) on at least one contact point (21) and a DC voltage (V) is applied between the contact pipe (2) and the work piece (3), so that a direct current (I) flows between the contact pipe (2) and the work piece (3) when one end of the wire (11) comes into contact with the work piece (3), as well as when an arc (4) is formed between the end of the wire (11) and the work piece (3), and wherein
the wire (1) is conveyed with at least one initial wire supply speed (v_{S}) in an initial phase (S) and is supplied to the work piece (3), and the end of the wire (11) is brought into contact with the work piece (3), whereupon an arc (4) is kindled and
the wire (1) is burned free, and
the wire (1) is successively supplied with a process wire supply speed (v_{A}) in a quasi-stationary working phase (A), wherein a balance between the wire supply and the wire smelting is adjusted,
**characterized in that**
the electrical welding power parameters and/or the process wire supply speed (v_{A})in the quasi-stationary working phase (A) are adjusted to a current warm-up of the wire (1), recorded before the molten end of the wire, on the contact pipe (2).

## Revendications

1. Procédé de soudage à l'arc, dans lequel un fil (1) est guidé à travers un tube de contact (2), au moyen d'un système de transport de fils et sans réversion du brûleur et/ou des fils (1), jusqu'à une surface (31) d'une pièce à usiner (3), où le fil (1) est amené au niveau d'au moins un point de contact (21) qui est en contact électrique avec le tube de contact (2) et où une tension continue (V) est appliquée entre le tube de contact (2) et la pièce à usiner (3), de telle sorte qu'un courant continu (I) circule entre le tube de contact (2) et la pièce à usiner (3) en cas de contact d'une extrémité de fil (11) avec la pièce à usiner (3), ainsi que lors de la formation d'un arc électrique (4) entre l'extrémité du fil (11) et la pièce à usiner (3), et dans lequel
le fil (1) est transporté, dans une phase de départ (S), avec au moins une vitesse d'avance du fil de départ (vₛ), puis acheminé jusqu'à la pièce à usiner (3), et l'extrémité du fil (11) est mise en contact avec la pièce à usiner (3), à la suite de quoi un arc électrique (4) est allumé et le fil (1) est brulé et, dans une phase de travail (A) quasiment stationnaire, le fil (1) est guidé ultérieurement à une vitesse d'avance du fil de processus (v_{A}), dans lequel un équilibre est ajusté entre l'avance du fil et la fonte du fil,
**caractérisé en ce que**
dans une phase de travail (A) quasiment stationnaire, les paramètres électriques du courant de soudage et/ou la vitesse d'avance du fil de processus (v_{A}) sont adaptés à un préchauffage actuel du fil (1) au niveau du tube de contact (2), lequel préchauffage est calculé en amont de l'extrémité de fil fondue.
